# EUROPEAN PATENT SPECIFICATION

(11) **EP 1 654 428 B1**
(45) Date of publication and mention of the grant of the patent: **24.01.2007**
(21) Application number: 05718232.1
(22) Date of filing: 21.03.2005
(51) Int. Cl.: E04F 13/08

(54) **Method and machine to produce a covering element**
Verfahren und Machine zum Herstellen eines Bedeckungselementes
Méthode et machine pour la production d'un élément de revêtement

(30) Priority: 26.05.2004 IT UD20040111
(43) Date of publication of application: 10.05.2006
(73) Proprietor: Studioart S.r.l., 36071 Arzignano (IT)
(72) Inventor: DALLE MESE, Nadia, I-36071 ARZIGNANO (IT); DALLE MESE, Gianfranco, I-36071 ARZIGNANO (IT)
(74) Representative: Petraz, Davide Luigi
(86) International application number: PCT/IB2005/000724
(87) International publication number: WO 2005/118976

(56) References cited:
- DE-A1- 19 634 928
- FR-A- 2 822 815
- FR-A- 2 838 761
- GB-A- 1 234 753
- JP-A- 2004 044 272
- US-A- 738 704
- US-A- 2 678 896

## Description

### FIELD OF THE INVENTION

The present invention concerns a method and a machine to produce a covering element, such as a tile, a strip, a spline, a tessera or suchlike, having a finishing consisting of a layer of hide, fake hide, leather, natural or synthetic fabric.

The covering element is able to be used particularly, but not exclusively, to cover floors and/or walls of buildings; for this reason, in the following description we shall refer to this specific application of the invention, although it can be used in various other fields, for example for covering furnishing elements, such as furniture and other objects.

### BACKGROUND OF THE INVENTION

Tiles are known, having a finishing consisting of a layer of tanned animal hide, or leather, of a fabric or other comparable material, used to cover floors and/or walls of buildings.

Such tiles comprise a support made of multilayer wooden material on which the layer of hide is applied, by means of glue, clinching or nailing, and have a thickness of between 1.5 and 3 cm.

A first disadvantage of such tiles is their high cost, caused both by the need to use a support made of wooden material of suitable consistency, and also by the technique for attaching the hide to said support.

The use of a wooden support and the attachment technique also constitute a constructional limit, since they do not allow to achieve covering elements of limited size, for example of the size of the tesserae used to make mosaic coverings.

Another disadvantage concerns the variations in size to which wood is subject, according to the variations in temperature and humidity to which it is subjected. These variations entail the need for particular strategies for laying the tiles which, under certain circumstances, and in the long term, are in any case insufficient to prevent cracks, buckling or sagging of the tiles.

FR-A-2 838 761 discloses a method for coating a surface by means of panel elements, each comprising a rigid support for maintaining the panel elements plane after fixing on the surface. The rigid support has two parallel faces, a first one of which, opposite to the surface, is completely coated with a flexible coating material. The flexible coating material covers also the lateral edges of the rigid support and, partially, also the other face near the edges.

One purpose of the present invention is to achieve a covering element with a finishing of hide, leather, their by-products, fake hide, or fabric, natural or synthetic, which can be produced in different forms, in limited sizes, including the thickness, and at a reasonable cost.

Another purpose of the present invention is to achieve a covering element with a finishing of textile material or comparable, which can easily be laid and which is resistant and stable irrespective of differences in temperature and humidity to which it is subjected.

The present Applicant has devised and embodied this invention to overcome the shortcomings of the state of the art and to obtain these purposes and other advantages.

### SUMMARY OF THE INVENTION

The present invention is set forth and characterized essentially in the main claims, while the dependent claim describes other innovative characteristics of the invention.

The covering element obtainable by a method and a machine according to the invention comprises a support at least partly covered by a finishing layer made of hide, leather, their by-products, fake hide, or of fabric, natural or synthetic, fixed thereon by glue means.

According to one characteristic of the covering element, the finishing layer at least partly covers the front surface and the perimeter edge of the support of the covering element.

According to a variant, the finishing layer is also turned under towards the bottom surface of the support, so as to cover at least the part of the latter adjacent to the perimeter edge.

Advantageously, the support is made with a substantially rigid and stable material, which can be either a synthetic material, such as for example polyester reinforced with fiberglass (FRP), or a natural material, except for wood, such as for example stone, glass, ceramic, brick or one of those derived from herbaceous plants, such as rice, maize, soya or suchlike.

The rigid and stable support allows to overcome the disadvantages deriving from the variations in size connected to the variations in temperature and humidity and thus allows to simplify the laying of the covering element.

The thickness of the finishing layer is advantageously between some tenths of a millimeter and some millimeters, for example between 0.2 mm and 2 mm, while the thickness of the support is in the order of some millimeters, for example between 1 and 5 mm, according to the other sizes (length and width) of the covering element, so that the overall thickness of the latter is less than a centimeter.

In a preferential form of embodiment, especially when the support is made of FRP, the gluing material, or glue, used to attach the finishing layer is based on polychloroprene adhesive to which glue for polyvinylchloride (PVC) has been added.

According to a variant, a diluent is also added to the polychloroprene adhesive.

According to another variant, the gluing material used is a water-based polyurethane glue, able to be reactivated by heat, for example at a temperature of 60-70°C.

The application of the finishing layer by means of glue allows to reduce the times and costs of producing the covering elements with respect to the state of the art.

These constructional characteristics also allow to achieve covering elements with substantially any shape and size, for example with a rectangular or square surface, having the sides of between 2 cm and 40 cm, with a considerable increase in versatility and possibility of use of the element, as will be made clear hereafter.

According to another variant, the finishing layer covers only one part of the front surface of the support, while the remaining part of the front surface is covered by an insert made of another material, such as wood, metal, glass or other.

According to another variant, the covering element comprises a basic substrate on which a plurality of supports, at least partly covered by said finishing layer, are applied.

In a possible form of embodiment, the supports are arranged slightly distanced from each other, so as to define a plurality of intermediate grooves, and have sizes correlated to those of a mosaic tessera.

According to a first embodiment, the basic substrate is made of substantially rigid natural or synthetic material.

According to a variant, the basic substrate is made of at least partly flexible natural or synthetic material, so as to allow the covering element to adhere in optimum manner to any surface whatsoever, even shaped, to which it is applied.

According to another characteristic feature of the method, not covered by the appended claims, to produce a covering element as described above, when the area of the front surface of the support is equal to or more than about 100 cm², comprises: a first step in which the support is made, with the desired shape and size; a second step in which, separately, the finishing layer is made, shaped so as to cover the desired portions of the front surface, of the perimeter edge and possibly of the bottom surface of the support; a third step in which the surfaces of the support are sprinkled with gluing material; a fourth step in which the finishing layer, previously shaped, is positioned and attached on the front surface of the support; a fifth step in which the lips of the finishing layer are bent back to cover at least the perimeter edges of the support; and a possible sixth step in which said lips are also turned under to adhere to the bottom surface of the support.

Said fifth step, and the possible sixth step too, are advantageously performed with a blade-type folder machine, while the finishing layer is held in position by suction means.

When the area of the front surface of each support is less than 100 cm², the method according to claim 1 provides to simultaneously make a plurality of covering elements. In this case, in a first step the different supports, with their surfaces already sprinkled with gluing material, are arranged on a plane so that they are adjacent each other and distanced from each other by a pre-determined distance; in a second step, a single sheet of finishing material is deposited on the front surfaces of the different supports; then, in a third step, the single sheet is cut to size, so as to form a finishing layer for each of the different supports; each finishing layer is then folded back individually in order to cover the perimeter edges of each support and possibly turned under against the bottom surface.

The different steps of said method are performed with an automated machine as defined by appended claim 3, provided both with pressure means, to press the finishing layer against the support, and also with heating means able to heat the gluing material in order to re-activate it.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view of a covering element;
- fig. 2 shows a section from A to A of fig. 1;
- fig. 3 shows an enlarged detail of a variant of a covering element;
- fig. 4 is a view from above of the development of a covering layer deposited over a support to make a covering element as in fig. 3;
- fig. 5 is a schematic view of a machine to simultaneously make a plurality of covering elements according to the present invention;
- fig. 6 shows a covering element in another variant;
- fig. 7 is a section from B to B of fig. 6;
- fig. 8 shows a variant of fig. 7.

### DETAILED DESCRIPTION OF A PREFERENTIAL FORM OF EMBODIMENT

With reference to the attached drawings, the number 10 denotes generally a covering element used to cover surfaces of buildings, such as floors or walls, of furniture or suchlike.

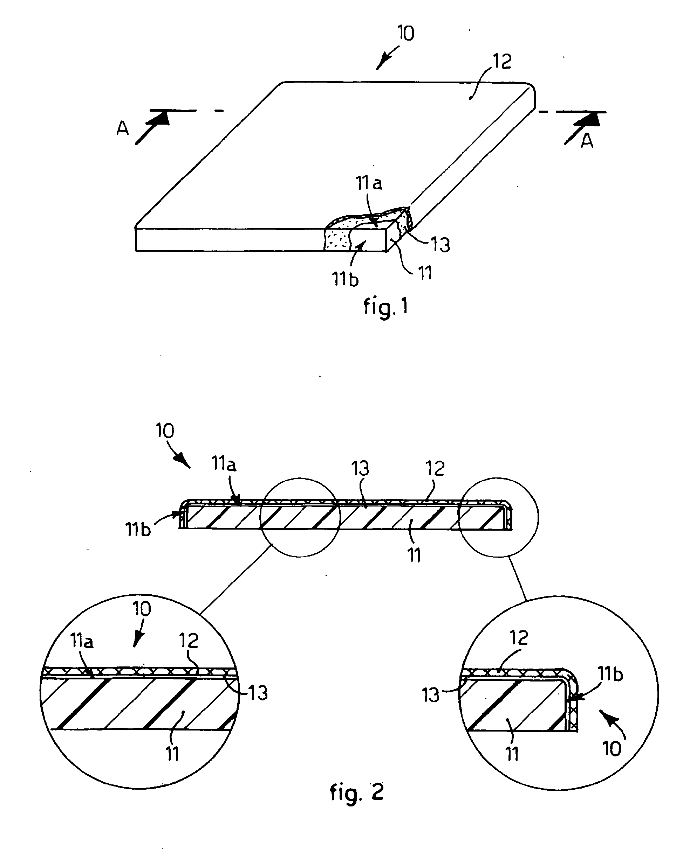

In the embodiment shown in figs. 1 and 2, the covering element 10 is conformed as a tile and comprises a support 11, substantially flattened in shape and made of rigid synthetic material, for example a plastic resin, which is covered by a finishing layer 12 made of hide.

Advantageously, the support 11 is substantially a parallelepiped and has a square base, with standardized size, for example cm 2.5 X 2.5; 5 X 5; 10 X 10; 20 X 20; 30 X 30, or rectangular, up to cm 30 X 40 and more, although it comes within the field of the present invention to provide other shapes of support 11 and hence of the covering element 10.

To be more exact, in the example shown here, the finishing layer 12 entirely surrounds both the front surface 11a, that is, the one which once laid faces towards the outside, and also the perimeter edge 11b of the support 11 and is attached on the latter by means of a glue 13.

In a preferential embodiment, the support 11 is made of polyester reinforced with glass fiber (FRP), or semi-expanded PVC, or semi-expanded polyurethane, and the layer of hide 12 is attached thereon by means of a glue based on polychloroprene adhesive to which glue for PVC and a diluent have been added.

Advantageously the glue has a quantity of polychloroprene adhesive of more than 50%, a quantity of glue for PVC of between 10% and 40%, and a quantity of diluent of between 5% and 20%.

It comes within the field of the present invention to provide a support 11 made of a material other than plastic material, and a finishing layer surrounding the support 11 made of textile material, or other material, natural or synthetic, comparable to fabric or hide.

It also comes within the field of the present invention to provide any other conformation of the covering element 10, for example a strip, a spline or suchlike, even with considerably limited size.

The use of a support 11 of synthetic material, advantageously made by molding, and the use of the glue 13 to apply the layer of hide 12, allow on the one hand to create covering elements 10 of any shape, both plane according to the invention, and curved (not covered by the appended claims), and on the other hand to make the covering elements 10 with sizes substantially equivalent to those of a tessera for mosaics.

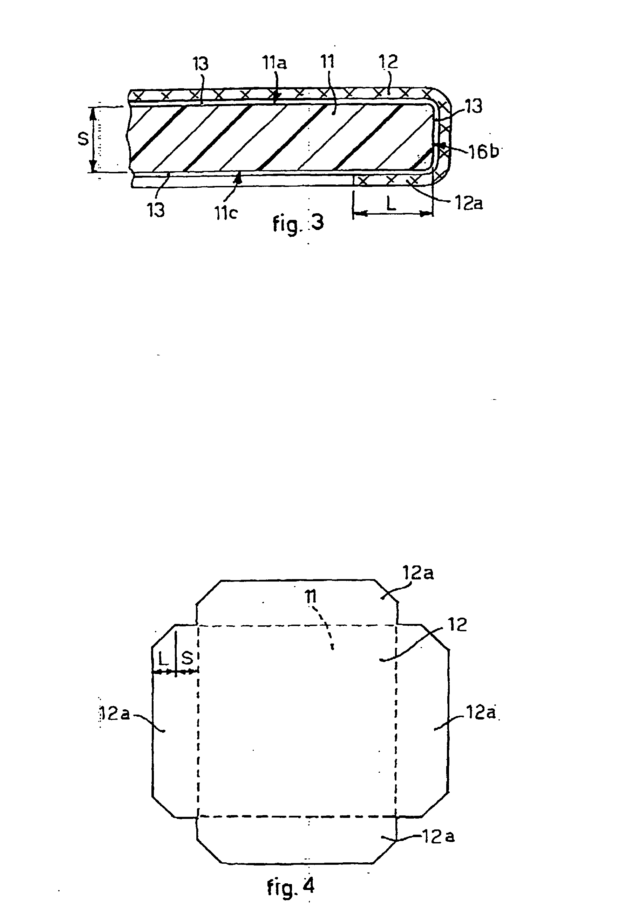

According to a variant, shown in fig. 3, the finishing layer 12 comprises lateral lips 12a which are turned under against a bottom surface 11c of the support 12, opposite the front surface 11a.

Fig. 4 shows the shaping that is advantageously given to a finishing layer 12 in relation to the support 11 below. It can be seen that the size S corresponds to the thickness of the support 11 and that the size L corresponds to that of the lips 12a to be turned under against the bottom surface 11c.

The method to make a covering element 10 as described heretofore, when the area of the front surface 11a is equal to or more than about 100 cm², for example for a format of 10 X 10 cm and more, comprises a first step during which the support 11 is made, with the desired shape and size.

Separately, the finishing layer 12 is made, for example by shaping it as shown in fig. 4, so it is able to cover the desired portions of the front surface 11a, the perimeter edge 11b and possibly at least a part of the bottom surface 11c of the support 11 adjacent to the perimeter edge 11b.

At least the surfaces 11a and 11c, but also the perimeter edge 11b if desired, of the support 11 are sprinkled with gluing material 13, for example of the type able to be reactivated with heat.

Subsequently, the finishing layer 12, previously shaped, is positioned and attached, by means of pressure means of a conventional type, on the front surface 11a of the support 11. In this step, the gluing material 13 is advantageously reactivated by means that produce heat, such as for example an electric resistance, or by blowing hot air.

In a subsequent step the lips 12a of the finishing layer 12 are folded back to cover at least the perimeter edge 11b of the support 11.

In a possible last step, said lips 12a are also turned under to make them adhere to the bottom surface of the support 11, where the glue 13 is already present (fig. 3).

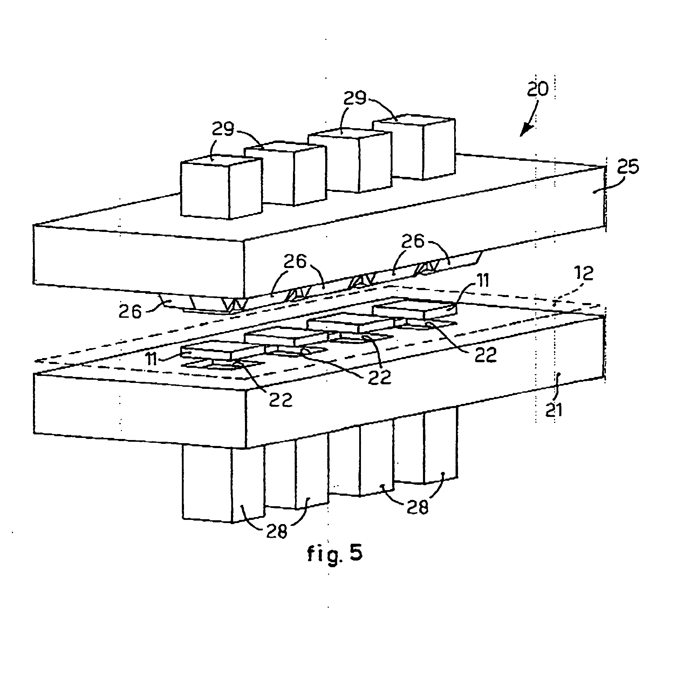

When the area of the front surface 11a of each support is less than 100 cm², the method according to the invention provides to simultaneously make a plurality of covering elements 10. In this case, in a first step the different supports 11, with their surfaces already sprinkled with gluing material 13, are arranged on a plane, for example that of a lower plate 21 (fig. 5) of an automatic machine 20, so that they are adjacent and distanced from each other by a pre-determined distance.

In this case, the lower plate 21 comprises four seatings 22 able to house four supports 11. A single sheet 12, indicated with a line of dashes in fig. 5, made with the material that will constitute the finishing layer of each covering element 10, is deposited on the front surfaces 11a of the different supports 11. Then, in a subsequent step, the individual sheet 12 is cut to size, by means of an upper mold 25 having four punches 26, provided with cutting blades and arranged in correspondence with the seatings 22.

The upper mold 25 is brought near the lower plate 21, in any conventional manner, so that the cutting blades of the punches 26 can cut to size the four finishing layers 12 superimposed over the four supports 11. During this downward movement of the upper mold 25, pressure elements 28 and 29, arranged in correspondence with the seatings 22 and, respectively, the punches 26, compress each finishing layer 12 against the corresponding support 11, thus ensuring it is attached by means of the glue 13 already spread on the surfaces 11a, 11b and 11c of the support 11.

With a following upward movement of both the lower pressure elements 28 and the upper pressure elements 29, the supports 11 enter into a cavity made inside the punches 26, so that the lips 12a are folded back on the perimeter edges 11b.

The pressure elements 28 and 29 are provided, inside, with electric resistances able to be selectively activated to heat the gluing material 13 and reactivate it.

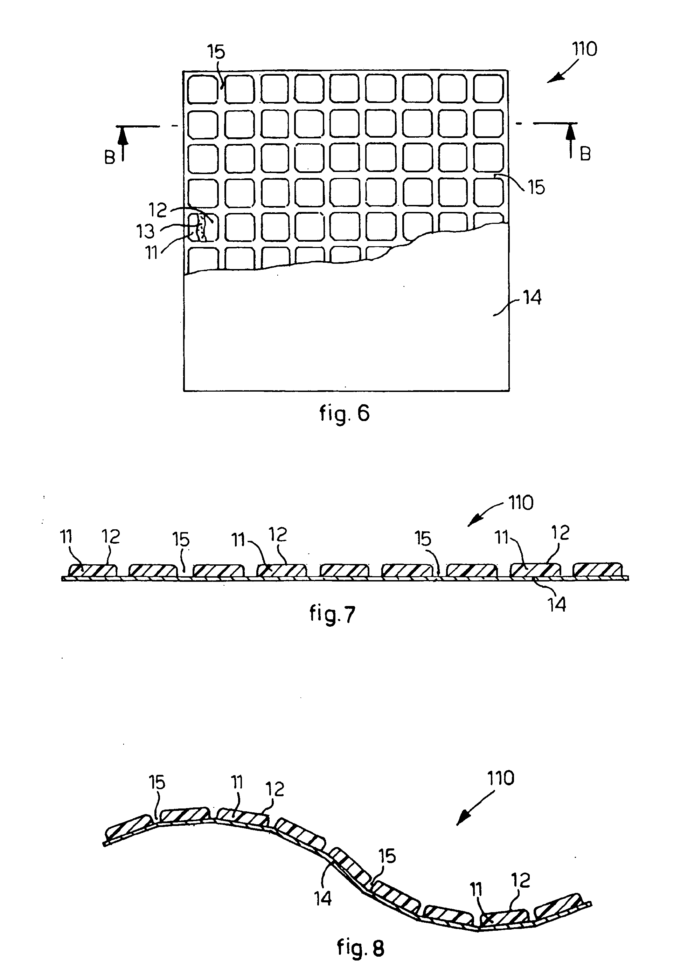

The variant shown in figs. 6, 7 and 8 shows a covering element 110 comprising a substrate 14 on which are attached, for example by gluing, a plurality of supports 11 of limited size covered by the finishing layer 12. The supports 11 are located slightly distanced from each other, so as to define a plurality of intermediate grooves 15 arranged in a lattice, and therefore confer on the covering element 110 a decorative mosaic effect.

According to a first embodiment, the substrate 14 is made of substantially rigid material, for example plastic or metal, so that the covering element 110, according to its size, assumes the appearance of a tile or panel.

According to a variant, shown in fig. 8, the substrate 14 is made of flexible material, such as for example a natural or synthetic rubber, so that the covering element 110 is deformable so as to adapt to the surface on which it is to be applied.

The substrate 14 made of flexible material and the presence of the intermediate grooves 15 allows to model the covering element 110 as desired, and to use it in order to cover, without any interruption in continuity, curved or angled surfaces too, for example relating to furnishing elements or cylindrical columns, with considerable accuracy and ease of application.

It is clear, however, that modifications and/or additions of parts may be made to the covering element 10 as described heretofore.

For example, the layer of hide 12, fabric or other comparable material can cover one part only of the outer surface 11a of the support 11, and the remaining part of the outer surface 11a can be covered by an insert of another material, for example wood, metal, glass or other material.

Moreover, the layer of hide 12, fabric or other comparable material can have substantially any decoration, coloring, mark or other personalized pattern.

It is also clear that, although the present invention has been described with reference to specific examples, a person of skill in the art shall certainly be able to achieve many other equivalent forms of covering element, within the field of protection defined by the appended claims.

## Claims

1. Method to simultaneously produce a plurality of covering elements (10), each comprising a support (11) having a front surface (11a) of less than 100 cm², and at least partly covered by a finishing layer (12) of hide, leather, their by-products, fake hide, or fabric, natural or synthetic, attached on said support (11) by means of glue means (13), **characterized in that** it comprises the following steps:
- a first step wherein said plurality of supports (11), with their respective front surfaces (11a) and perimeter edges (11b) already sprinkled with said glue means (13), are arranged on a plane, so that they are adjacent and distanced from each other by a pre-determined distance;
- a second step wherein a single sheet of finishing material is deposited on the front surfaces (11a) of said plurality of supports (11);
- a third step wherein said single sheet is cut to size, so as to form a finishing layer (12) for each support of said plurality of supports (11);
- a fourth step wherein each finishing layer (12) is individually folded back to cover the perimeter edges (11b) of each support (11).

2. A method according to claim 1, **characterized in that** during said forth step each finishing layer (12) is also turned under against the relative bottom surface (11c) spread with glue means.

3. Machine to automatically perform at least some steps of the method according to claim 1 or 2, to simultaneously produce a plurality of covering elements (10), each comprising a support (11) having a front surface (11a) of less than 100 cm², and at least partly covered by a finishing layer (12) of hide, leather, their by-products, fake hide, or fabric, natural or synthetic, attached on said support (11) by means of glue means (13), wherein the machine comprises seatings (22) to house said supports (11), cutting blades in correspondence with said seatings (22) to cut to size said single sheet to form said finishing layer (12) for each support (11), pressure means (28, 29) arranged in correspondence with said seatings (22) and said cutting blades to press said finishing layers (12) against said supports (11) for ensuring they are attached by means of said glue means (13), and heating means able to heat said glue means (13) in order to reactivate said glue means (13).

## Patentansprüche

1. Verfahren zum gleichzeitigen Herstellen einer Vielzahl von Abdeckelementen (10), worin jedes einen Träger (11) mit einer Frontoberfläche (11A) von weniger als 100 cm² aufweist, und mindestens teilweise mit einer Veredelungsschicht (12) aus Haut, Leder und deren Nebenprodukten, wie Hautimitat, oder natürlichem oder synthetischem Stoff bedeckt ist, welche mittels Klebemittel (13) an diesem Träger (11) befestigt ist, **dadurch gekennzeichnet, dass** dieses Verfahren die folgenden Schritte aufweist:
• einen ersten Schritt, worin die Vielzahl von Trägern (11) mit deren Frontoberflächen (11A) und deren Umfangskanten (11B) bereits mit dem Kleber (13) besprenkelt sind, auf einer Ebene angeordnet sind, so dass diese angrenzend und zueinander in einem vorbestimmten Abstand beabstandet sind;
• einen zweiten Schritt, worin eine einzelne Schicht von Veredelungsmaterial auf der Frontoberfläche (11A) der Vielzahl von Trägern (11) aufgebracht ist;
• einen dritten Schritt, worin die einzelne Schicht auf eine Größe geschnitten ist, derart, um eine Veredelungsschicht (12) für jeden Träger der Vielzahl von Trägern (11) zu bilden;
• einen vierten Schritt, worin die Veredelungsschicht (12) einzeln zur Abdeckung der Umfangskanten (11B) jedes des Trägers (11) gefalzt ist.

2. Ein Verfahren nach Anspruch 1, **dadurch gekennzeichnet, dass** während des vierten Schrittes jede Veredelungsschicht (12) nach unten gebogen ist, gegen die diesbezügliche Bodenoberfläche (11C), welche mit einem Klebemittel besprüht ist.

3. Maschine zum automatischen Ausführen mindestens einiger Schritte des Verfahrens gemäß den Ansprüchen 1 oder 2, zur gleichzeitigen Herstellung einer Vielzahl von Abdeckelementen (10), worin jedes einen Träger (11) mit einer Frontoberfläche (11A) von weniger als 100 cm² aufweist, und mindestens teilweise durch eine Veredelungsschicht (12) aus Haut, Leder oder ihren Nebenprodukten, wie Hautimitat, oder natürlichem oder synthetischem Stoff bedeckt ist, welche auf dem Träger (11) mittels Klebemittel (13) befestigt ist, worin die Maschine Auflageflächen (22) zum Aufnehmen der Träger (11) aufweist, Schneideklingen in Übereinstimmung mit den Auflageflächen (22) zum Abmaßen einer einzelnen Schicht zur Bildung einer Veredelungsschicht (12) für jeden Träger (11) aufweist, Eindruckmittel (28, 29) angeordnet in Übereinstimmung mit den Auflageflächen (22) und der Schneideklingen, um die Veredelungsschicht (12) gegen den Träger (11) zu drücken, um sicherzustellen, dass diese mittels des Klebemittels (13) aufgebracht sind, und Heizmittel, zur Erwärmung des Klebermittels (13) zwecks Reaktivierung des Klebemittels (13).

## Revendications

1. Méthode de production simultanée d'une pluralité d'éléments de revêtement (10), comprenant chacun un support (11) présentant une surface frontale (11a) inférieure à 100 cm² et recouverte au moins partiellement d'une couche de finition (12) en peau, cuir, leurs sous-produits, simili peau, ou en tissu, naturel ou synthétique, fixé sur ledit support (11) par un moyen de collage (13), méthode **caractérisée en ce qu'**elle comprend les étapes suivantes :
- une première étape consistant à disposer sur un plan ladite pluralité de supports (11), dont la surface (11a) et les bords périmétriques (11b) sont déjà enduits dudit moyen de collage (13), de sorte qu'ils se trouvent adjacents et distants les uns des autres d'une distance prédéfinie ;
- une deuxième étape consistant à déposer une feuille unique de matériau de finition sur les surfaces frontales (11a) de ladite pluralité de supports (11) ;
- une troisième étape consistant à découper à dimension ladite feuille unique, de manière à former une couche de finition (12) pour chaque support de ladite pluralité de supports (11) ;
- une quatrième étape consistant à replier individuellement chaque couche de finition (12) afin de recouvrir les bords périmétriques (11b) de chaque support (11).

2. Méthode selon la revendication 1, **caractérisée en ce qu'**au cours de ladite quatrième étape, chaque couche de finition (12) est également rabattue contre la surface de dessous correspondante (11c), enduite d'un moyen de collage.

3. Machine permettant de réaliser automatiquement au moins certaines étapes de la méthode selon la revendication 1 ou 2, afin de produire simultanément une pluralité d'éléments de revêtement (10), comprenant chacun un support (11) présentant une surface frontale (11a) inférieure à 100 cm² et recouverte au moins partiellement d'une couche de finition (12) en peau, cuir, leurs sous-produits, simili peau, ou en tissu, naturel ou synthétique, fixé sur ledit support (11) par un moyen de collage (13), la machine comprenant des sièges (22) destinés à accueillir lesdits supports (11), des lames de découpe en correspondance avec lesdits sièges (22) pour découper à dimension ladite feuille unique afin de former ladite couche de finition (12) pour chaque support (11), des moyens de pression (28, 29) disposés en correspondance avec lesdits sièges (22) et lesdites lames de découpe, afin de presser lesdites couches de finition (12) contre lesdits supports (11) pour garantir leur fixation au moyen dudit moyen de collage (13), et des moyens de chauffage aptes à chauffer ledit moyen de collage (13) afin de le réactiver.
